(19) **Europäisches Patentamt / European Patent Office / Office européen des brevets**

(11) **EP 3 289 830 B1**

(12) **EUROPÄISCHE PATENTSCHRIFT**

(45) Veröffentlichungstag und Bekanntmachung des Hinweises auf die Patenterteilung:
**24.07.2024  Patentblatt 2024/30**

(21) Anmeldenummer: **16722100.1**

(22) Anmeldetag: **28.04.2016**

(51) Internationale Patentklassifikation (IPC):
**H05B 47/11** *(2020.01)*   **H05B 45/20** *(2020.01)*
**H05B 45/60** *(2022.01)*   **H05B 47/19** *(2020.01)*
**F21V 7/00** *(2006.01)*

(52) Gemeinsame Patentklassifikation (CPC):
**F21V 7/0016; H05B 45/20; H05B 45/60; H05B 47/11; H05B 47/19;** F21Y 2115/15; H05B 47/105; Y02B 20/40

(86) Internationale Anmeldenummer:
**PCT/EP2016/059512**

(87) Internationale Veröffentlichungsnummer:
**WO 2016/174147 (03.11.2016 Gazette 2016/44)**

(54) **LEUCHTENEINRICHTUNG UND VERFAHREN ZUR STEUERUNG EINER LEUCHTENEINRICHTUNG**

LIGHT DEVICE AND METHOD FOR CONTROLLING A LIGHT DEVICE

DISPOSITIF D'ÉCLAIRAGE ET PROCÉDÉ DE COMMANDE D'UN DISPOSITIF D'ÉCLAIRAGE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **28.04.2015  CH 5832015**

(43) Veröffentlichungstag der Anmeldung:
**07.03.2018  Patentblatt 2018/10**

(73) Patentinhaber: **IART Lab GmbH**
**4056 Basel (CH)**

(72) Erfinder:
• **SPIESS, Valentin, Benjamin**
**4056 Basel (CH)**

• **FERRARI, Juan, José**
**75018 Paris (FR)**

(74) Vertreter: **Latscha Schöllhorn Partner AG**
**Grellingerstrasse 60**
**4052 Basel (CH)**

(56) Entgegenhaltungen:
EP-A1- 2 804 443    WO-A1-2009/040698
WO-A1-2014/037359    WO-A1-2014/115048
WO-A1-2014/184009    US-A1- 2012 163 027
US-A1- 2012 206 050

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 3 289 830 B1

## Beschreibung

### Technisches Gebiet

Die Erfindung betrifft eine Leuchteneinrichtung zum Ausleuchten eines Zielraums sowie ein zugehöriges Steuerungsverfahren.

Solche Leuchteneinrichtungen mit mindestens einem Leuchtenmodul, das eine Vorderseite und eine Rückseite aufweist sowie ein zum Abstrahlen von der Vorderseite angeordnetes vorderseitiges Leuchtmittel, ein zum Abstrahlen von der Rückseite angeordnetes rückseitiges Leuchtmittel und eine Steuereinheit, wobei die Steuereinheit dazu ausgebildet ist, das vorderseitige Leuchtmittel und das rückseitige Leuchtmittel einzustellen, können beispielsweise zum Ausleuchten von Räumen oder Beleuchten von Innen- oder Aussenflächen eingesetzt werden.

### Stand der Technik

Zur Beleuchtung von Aussen- und Innenräumen werden heutzutage verschiedenste Arten von Leuchteneinrichtungen eingesetzt. Beispielsweise werden sind Leuchteneinrichtungen weit verbreitet, die direkt an Wänden oder Decken befestigt, auf dem Boden oder einer anderen Fläche aufgestellt oder abgependelt montiert sind. Zur Lichterzeugung werden unterschiedliche Leuchtmittel eingesetzt, wobei aus verschiedenen Gründen Leuchtmittel mit Leuchtdioden (LED) zunehmend beliebter sind. Beispielsweise können LED flexibel eingestellt werden, haben eine verhältnismässig lange Lebensdauer und können verhältnismässig energieeffizient betrieben werden. In neuerer Zeit werden auch zunehmend organische Leuchtdioden (OLED) als Leuchtmittel eingesetzt. OLED sind leuchtende Dünnschichtbauelemente aus organischen halbleitenden Materialien, die sich von herkömmlichen LED dadurch unterscheidet, dass die elektrische Stromdichte und die Leuchtdichte geringer sind und keine einkristallinen Materialien erforderlich sind. Im Vergleich zu herkömmlichen LED lassen sich OLED in Dünnschichttechnik kostengünstig und in beliebiger Form herstellen.

Zur Erzeugung bevorzugter Leuchteigenschaften ist es häufig zweckdienlich, dass Leuchteneinrichtungen von ihren Vorderseiten und gleichzeitig von ihren Rückseiten aus Licht abstrahlen. Insbesondere kann auf diese Weise eine gleichmässige kontrastarme Beleuchtung erzeugt werden. Beispielsweise umfassen solche Leuchteneinrichtungen ein vorderseitiges Leuchtmittel, das Licht von der Vorderseite in einen Vorderraum abstrahlt, und ein rückseitiges Leuchtmittel, das Licht von der Rückseite in einen Rückraum abstrahlt. Typischerweise sind Leuchteneinrichtungen so montiert, dass das vorderseitige Leuchtmittel Licht direkt in den zu beleuchtenden Innen- oder Aussenraum beziehungsweise Zielraum abstrahlt und dass das rückseitige Leuchtmittel Licht indirekt, beispielsweise von einer Decke oder Wand reflektiert, in den Zielraum abstrahlt. Zusammen können die vorder- und rückseitigen Leuchtmittel so ein bevorzugtes Lichtniveau im Zielraum erzeugen.

Weiter sind moderne Leuchteneinrichtungen zunehmend flexibel einstellbeziehungsweise konfigurierbar. Beispielsweise ist es Benutzern häufig möglich, bestimmte Leuchteigenschaften wie beispielsweise die Helligkeit oder die Farbe anzupassen. Auch können Leuchteneinrichtungen dazu ausgebildet sein, automatisch gewissen Leuchteigenschaften anzupassen. Beispielsweise sind Leuchten bekannt, die ihre Helligkeit erhöhen, wenn sich jemand in ihrer Nähe befindet oder die sich ausschalten, wenn sich niemand in ihrer Nähe befindet. Beispielsweise ist aus der EP 2 804 443 A1 eine Leuchte bekannt, mit der eine Gesamtlichtmenge bei einem Objekt konstant gehalten werden kann. Aus der WO 2014/115048 A1 ist weiterhin eine Leuchte bekannt, bei welcher etwa Photodetektoren zum Detektieren des Lichtniveaus in der Leuchte selbst angeordnet sind.

Nachteilig an den bekannten Leuchteneinrichtungen kann sein, dass bei einer Änderung der Leuchteigenschaften das Lichtniveau im zu beleuchtenden Raum ändert. Wird beispielsweise die Lichtfarbe des vorderseitigen Leuchtmittels eingestellt, ändert das Lichtniveau im Zielraum, das zusätzlich vom reflektierten Licht des rückseitigen Leuchtmittels beeinflusst wird. Es ist typischerweise aufwendig und schwierig, Leuchteigenschaften von Leuchteneinrichtungen anzupassen, ohne die Ausleuchtung des Zielraums zu beeinträchtigen. Insbesondere bei verhältnismässig häufig beziehungsweise schnell ändernden Leuchteigenschaften wie beispielsweise bei der Darstellung von Informationen über vorderseitige Leuchtmittel kann diese Beeinträchtigung ein unerwünschtes Ausmass annehmen.

Der vorliegenden Erfindung liegt daher die Aufgabe zugrunde, eine Leuchteneinrichtung oder ein Steuerverfahren für eine Leuchteneinrichtung vorzuschlagen, mit der oder dem Leuchteigenschaften in einem Zielraum mit einer minimierten Beeinträchtigung der Ausleuchtung des Zielraums angepasst werden können.

### Darstellung der Erfindung

Die Aufgabe wird erfindungsgemäss durch eine Leuchteneinrichtung gelöst, wie sie im unabhängigen Anspruch 1 definiert ist, und durch ein Verfahren, wie es im unabhängigen Anspruch 10 definiert ist. Vorteilhafte Ausführungsvarianten der Erfindung ergeben sich aus den abhängigen Ansprüchen.

Das Wesen der Erfindung besteht im Folgenden: Eine Leuchteneinrichtung zum Ausleuchten eines Zielraums mit mindestens einem Leuchtenmodul, das eine dem Zielraum zugewandte Vorderseite und eine dem Zielraum abgewandte Rückseite aufweist und ein zum Abstrahlen von der Vorderseite angeordnetes vorderseitiges Leuchtmittel, ein zum Abstrahlen von der Rückseite angeordnetes rückseitiges Leuchtmittel und eine Steuereinheit umfasst, wobei die Steuereinheit dazu ausgebildet ist, das vorderseitige Leuchtmittel und das rückseitige Leuchtmittel einzustellen, die Steuereinheit des mindestens einen Leuchtenmoduls eine Schnittstelle umfasst, über welche die Leuchteneinrichtung mit einem im Zielraum angeordneten Kalibrierungsgerät verbindbar ist, wobei die Steuereinheit des mindestens einen Leuchtenmoduls dazu ausgestaltet ist, über die Schnittstelle ein Kalibrierungssignal vom Kalibrierungsgerät zu empfangen, das mindestens eine Leuchtenmodul unter Auswertung des Kalibrierungssignals auf ein voreinstellbares Lichtniveau zu kalibrieren, das vorderseitige Leuchtmittel zur Darstellung von Informationen dynamisch einzustellen und das rückseitige Leuchtmittel an das dynamisch eingestellte vorderseitige Leuchtmittel angepasst einzustellen, so dass das kalibrierte Lichtniveau konstant ist wobei die Steuereinheit des mindestens einen Leuchtenmoduls dazu ausgestaltet ist, bei einer Änderung des vorderseitigen Leuchtmittels das rückseitige Leuchtmittel umgekehrt proportional zur Änderung des vorderseitigen Leuchtmittels zu ändern, und wobei die Leuchteneinrichtung eine Mehrzahl von identischen Leuchtenmodulen umfasst, wobei die Mehrzahl von Leuchtenmodulen miteinander zu einem Netzwerk verbunden sind, in dem jedes der Leuchtenmodule einen Knoten bildet.

Der Begriff "Lichtniveau" kann sich im Zusammenhang mit der Erfindung auf ein empfundenes Lichtniveau an einem Zielort beziehungsweise in einem Zielraum beziehen. Dabei kann das Lichtniveau im Betrieb der Leuchteneinrichtung von einem Benutzer beziehungsweise einer Benutzergruppe empfunden werden. Das Lichtniveau kann mit der Intensität des Lichts im Zielraum korrelieren. Es kann eine empfundene Ausleuchtung des Zielraums repräsentieren, die beispielsweise für eine bestimmte Nutzung im Zielraum notwendig ist.

Zum Einstellen der vorder- und rückseitigen Leuchtmittel kann die Steuereinheit Signale erzeugen und auf die Leuchtmittel übertragen. Bekanntermassen entspricht ein Signal im technischen Sinne einer mit einer Information assoziierten, messbaren physikalischen Grösse wie z. B. einer elektrischen Spannung oder einer Feldstärke. Solche Signale können auf unterschiedliche bekannte Art erzeugt, übertragen, empfangen und ausgewertet werden. Alle Einstellungen, die wie vor- und nachstehend beschrieben an den vorder- und/oder rückseitigen Leuchtmitteln von der Steuereinheit vorgenommen werden, können durch von der Steuereinheit erzeugten und an die vorder- beziehungsweise rückseitigen Leuchtmittel übertragen Signalen umgesetzt werden.

Zur Kalibrierung kann das Lichtniveau von einem Kalibrierungsgerät wie beispielsweise einer Kamera oder einem Lichtintensitätssensor erfasst oder gemessen werden. Das Kalibrierungsgerät kann mit der Steuereinheit der Leuchteneinrichtung verbunden sein und diesem Kalibrierungssignale übermitteln. Es ist erfindungsgemäss in einem Zielraum aufgestellt sein, wobei der Zielraum beziehungsweise Zielort der Raum beziehungsweise Ort sein kann, der von der Leuchteneinrichtung ausgeleuchtet werden soll oder wird. Beim oder vor dem Kalibrieren kann insbesondere das Lichtniveau am Zielort beziehungsweise im Zielraum voreingestellt werden. An diesem Zielort beziehungsweise Zielraum ist dann das Lichtniveau konstant.

Erfindungsgemäss kann also das mindestens eine Leuchtenmodul der Leuchteneinrichtung Informationen über das das oder die vorderseitigen Leuchtmittel in den Zielraum übertragen beziehungsweise in diesem darstellen. Gleichzeitig passt die Steuereinheit des Leuchtenmoduls das rückseitige Leuchtmittel automatisch so an, dass das Lichtniveau im Zielraum konstant oder quasi konstant wie voreingestellt gehalten werden kann. Auf diese Weise kann die Leuchteneinrichtung die Leuchteigenschaften im Zielraum so beeinflussen, dass eine Beeinträchtigung der Ausleuchtung des Zielraums minimiert ist, auch wenn das vorderseitige Leuchtmittel zur Darstellung von Informationen verwendet wird.

Vorzugsweise setzt sich das Lichtniveau aus einem Anteil des vom vorderseitigen Leuchtmittel abgestrahlten Lichts und einem Anteil des vom rückseitigen Leuchtmittel abgestrahlten und reflektierten Lichts zusammen, wobei die Steuereinheit des mindestens einen Leuchtenmoduls dazu ausgestaltet ist, einen Faktor des Anteils des vom rückseitigen Leuchtmittel abgestrahlten und reflektierten Lichts zum Anteil des vom vorderseitigen Leuchtmittel abgestrahlten Lichts konstant zu halten.

In diesem Zusammenhang kann sich der Begriff "Faktor" im mathematischen Sinne auf einen Operanden einer Multiplikation beziehen. Zudem kann sich der Begriff "reflektiert" auf eine Reflexion des vom rückseitigen Leuchtmittel abgestrahlten Lichts in den Zielraum beziehen. In der Physik bezeichnet Reflexion das Zurückwerfen von Wellen an einer Grenzfläche, an der sich der Wellenwiderstand oder der Brechungsindex des Ausbreitungsmediums ändert. Vor diesem Hintergrund kann im Zusammenhang mit der Erfindung das Ausbreitungsmedium Luft und die Grenzfläche eine Fläche einer Wand oder einer Decke oder einer sonstigen der Rückseite des Leuchtenmoduls zugewandte Fläche sein. Typischerweise verliert das Licht bei der Reflexion einen Teil seiner Intensität.

Die vom rückseitigen Leuchtmittel abgestrahlten Lichtewellen werden also an der Grenzfläche reflektiert und zumindest anteilsweise in den Zielraum umgeleitet. Das vorderseitige Leuchtmittel kann zumindest teilweise direkt Licht in den Zielraum abstrahlen. Damit wird das Leuchtniveau im Zielraum von einem Gemisch aus einem Anteil direkt vom vorderseitigen Leuchtmittel abgestrahlten Lichts und einem Anteil vom rückseitigen Leuchtmittel abgestrahlten und in den Zielraum reflektierten Lichts bestimmt.

Indem der Faktor des Anteils des vom rückseitigen Leuchtmittel abgestrahlten und reflektierten Lichts zum Anteil des vom vorderseitigen Leuchtmittel abgestrahlten Lichts konstant gehalten wird, kann auch das Lichtniveau im Zielraum effizient konstant gehalten werden. Nimmt beispielsweise der Anteil an vom vorderseitigen Leuchtmittel abgestrahlten Lichts beispielsweise zur Informationswiedergabe ab, so kann die Steuereinheit das rückseitige Leuchtmittel einstellen, indem es dessen abgestrahltes Licht um den Faktor vermehrfacht, sodass das Lichtniveau im Zielraum konstant bleibt.

Erfindungsgemäss ist die Steuereinheit des mindestens einen Leuchtenmoduls dazu ausgestaltet, bei einer Änderung des vorderseitigen Leuchtmittels das rückseitige Leuchtmittel umgekehrt proportional zur Änderung des vorderseitigen Leuchtmittels zu ändern. Beispielsweise kann die Lichtintensität des vom vorderseitigen Leuchtmittel direkt in den Zielraum abgestrahlten Lichts zur Darstellung einer Information erhöht werden. In einem solchen Fall wird die Lichtintensität des vom rückseitigen Leuchtmittel in den Zielraum abgestrahlten Lichts proportional reduziert. Dabei kann der vorstehende erläuterte Faktor angewendet werden, sodass das vom rückseitigen Leuchtmittel abgestrahlte Licht im Vergleich zur Erhöhung des vom vorderseitigen Leuchtmittel abgestrahlten Lichts um ein mehrfaches reduziert wird. Auf diese Weise kann das Lichtniveau auf einfache und effiziente Weise konstant gehalten werden.

Vorzugsweise umfasst die Steuereinheit des mindestens einen Leuchtenmoduls eine Platine mit einem Prozessor, einem Arbeitsspeicher und einem Datenspeicher, wobei die Platine zwischen dem vorderseitigen Leuchtmittel und dem rückseitigen Leuchtmittel angeordnet ist. Eine solche Ausgestaltung des mindestens einen Leuchtenmoduls ermöglicht die Realisierung einer leistungsstarken Steuereinheit in einer flachen Bauweise.

Vorzugsweise umfassen das vorderseitige Leuchtmittel und das rückseitige Leuchtmittel des mindestens einen Leuchtenmoduls jeweils oder zumindest eines davon eine organische Leuchtdiode. Die organischen Leuchtdioden (OLED) können eine beliebige bevorzugte Grundform beziehungsweise Oberflächenform aufweisen. Beispielsweise können sie quadratisch, rechteckig, rund elliptisch, dreieckig oder ähnlich ausgebildet sein. Insbesondere wenn die Steuereinheit wie vorstehend beschrieben über eine Platine realisiert ist, kann mittels der organischen Leuchtdioden eine kompakte beziehungsweise flache Ausgestaltung des Leuchtenmoduls beispielsweise in einer Sandwichstruktur erreicht werden. Auch kann mit OLED Leuchtmitteln ein sehr effizienter Betrieb der Leuchteneinrichtung realisiert werden.

Vorzugsweise ist das vorderseitige Leuchtmittel des mindestens einen Leuchtenmoduls bewegungssensitiv, wobei die Steuereinheit des mindestens einen Leuchtenmoduls dazu ausgestaltet ist, das vorderseitige Leuchtmittel und das rückseitige Leuchtmittel unter Auswertung eines vom vorderseitigen Leuchtmittel erfassten Steuersignals einzustellen. Beispielsweise kann das vorderseitige Leuchtmittel berührungssensitiv sein. Über eine Berührung des vorderseitigen Leuchtmittels durch einen Benutzer kann so die Leuchteneinrichtung eingestellt werden, beispielsweise ein- oder ausgeschaltet, gedimmt oder ähnlich. Auch kann das vorderseitige Leuchtmittel beispielsweise kapazitiv dazu ausgebildet sein, nahe Bewegungen berührungslos zu erfassen. So kann die Leuchteneinrichtung beispielsweise über berührungslose Wischbewegungen eingestellt werden.

Erfindungsgemäss umfasst die Steuereinheit des mindestens einen Leuchtenmoduls eine Schnittstelle, über welche die Leuchteneinrichtung mit einem Kalibrierungsgerät verbindbar ist, wobei die Steuereinheit dazu ausgestaltet ist, über die Schnittstelle ein Kalibrierungssignal vom Kalibrierungsgerät zu empfangen und das Leuchtenmodul unter Auswertung des Kalibrierungssignals auf das voreinstellbare Lichtniveau zu kalibrieren. Das Kalibrierungsgerät kann beispielsweise eine Kamera oder ein Helligkeitssensor sein. Insbesondere kann es auch ein Smartphone oder ein Tablet sein. Das Kalibrierungssignal kann beispielsweise Informationen über Helligkeit oder Lichtintensität beinhalten. Die Schnittstelle kann insbesondere für eine kabellose Verbindung vorgesehen sein. Beispielsweise kann sie ein WLAN-Adapter oder Bluetooth-Adapter mit einem Sender/Empfänger sein beziehungsweise umfassen. Unter dem Akronym "WLAN" wird ein Wireless Local Area Network als ein lokales Funknetz verstanden. Typischerweise sind WLAN gemäss dem Standard der IEEE-802.11-Familie aufgesetzt.

Vorzugsweise umfasst die Steuereinheit des mindestens einen Leuchtenmoduls eine Internetschnittstelle. In einer vorteilhaften Ausführung ist die Internetschnittstelle identisch mit der Schnittstelle, über welche das Kalibrierungsgerät verbindbar ist. Insbesondere kann sie als WLAN-Adapter für eine kabellose Verbindung mit dem Internet vorgesehen sein. Informationen, die mittels der Steuereinheit über das vorderseitige Leuchtmittel dargestellt werden, können über Internet bezogen werden. Beispielsweise können Informationen über das Wetter über das Internet bezogen und in der Leuchteneinrichtung dargestellt werden.

Vorzugsweise umfasst die Steuereinheit des mindestens einen Leuchtenmoduls mindestens einen Sensor, wobei die Steuereinheit dazu ausgestaltet ist, das vorderseitige Leuchtmittel und das rückseitige Leuchtmittel unter Auswertung eines vom Sensor erfassten Signals einzustellen. Über die Auswertung von Sensorsignalen kann das Lichtniveau im Zielraum noch verbessert konstant gehalten werden. Zum Beispiel kann über einen Helligkeitssensor die beispielsweise von Sonnenlicht erzeugte Grundhelligkeit im Zielraum miteinbezogen werden. Dadurch lässt sich die Qualität des konstanten Lichtniveaus im Zielraum weiter verbessern. Zudem können über Sensoren auch Informationen erfasst werden, die über das vorderseitige Leuchtmittel dargestellt werden können. Beispielsweise kann in einer Anwendung der Leuchteneinrichtung mit einer Vielzahl von Leuchtmitteln der mindestens eine Sensor von jedem Leuchtmittel einen Lichtsensor umfassen. Bei einer Regelung der Leuchteneinrichtung auf eine konstante Helligkeit kann es bei einer Änderung des Umgebungslichts zu einem sichtbaren Schwingen kommen. Beispielsweise kann in einer solchen Anwendung ein schwarmartigen Nachschwingen erzeugt werden, wenn eine Person an der Leuchteneinrichtung vorbeigeht und somit das Umgebungslicht kurzfristig ändert.

Dabei ist der mindestens eine Sensor ein Sensor der Gruppe von Sensoren bestehend aus Helligkeitssensoren, Anwesenheitssensoren, Infrarotsensoren, akustische Sensoren, thermische Sensoren, Mikrofonen, Thermometern, Abstandssensoren, Beschleunigungssensoren und Kameras oder eine beliebige Kombination davon. Informationen von solchen Sensoren können in unterschiedlichen Anwendungen der Leuchteneinrichtung besonders vorteilhaft sein. Insbesondere kann die Kombination aller dieser Sensoren oder einer bestimmten Auswahl davon vorteilhaft sein.

Vorzugsweise weist die Leuchteneinrichtung einen Periphersensor auf, wobei die Steuereinheit des mindestens einen Leuchtenmoduls dazu ausgestaltet ist, das vorderseitige Leuchtmittel und das rückseitige Leuchtmittel unter Auswertung eines vom Periphersensor erfassten Signals einzustellen. Der Periphersensor kann beispielsweise ein Helligkeitssensor, ein Anwesenheitssensor, ein Infrarotsensor, ein akustischer Sensor, ein thermischer Sensor, ein Mikrofon, ein Thermometer, ein Abstandssensor, ein Beschleunigungssensor oder eine Kamera sein. Er kann entfernt von den Leuchtenmodulen der Leuchteneinrichtung positioniert sein. Beispielsweise kann der Periphersensor eine Kamera sein, die irgendwo aufgestellt ist und über Internet mit den Leuchtenmodulen verbunden ist. Die Steuereinheit des Leuchtenmoduls kann dann von der Kamera oder einem anderen Sensor erfasste Signale auswerten und die vorderseitigen und rückseitigen Leuchtmittel einstellen. Auf diese Weise kann eine periphere Information über die Leuchteneinrichtung dargestellt werden. Beispielsweise kann der Periphersensor Lichtinformationen von einer Gebäudeaussenseite in einen Raum übertragen werden, in den kein Licht von aussen einfallen kann (fensterloser Raum). Oder es können Informationen an einem anderen Ort auf der Welt erfasst, zur Leuchteneinrichtung übertragen und von dieser dargestellt werden. Eine solche Ausgestaltung der Leuchteneinrichtung ermöglicht eine Vielzahl von neuen ortsunabhängigen Anwendungen.

Das Leuchtenmodul kann eine rückseitige Montagehalterung aufweisen, über die es beispielsweise an einer Wand montiert werden kann oder es kann über eine Aufhängung an einer Decke befestigt sein. Alternativ dazu umfasst die Leuchteneinrichtung vorzugsweise eine Halterung mit einer Mehrzahl von elektrisch leitenden Stäben und eine mit den Stäben verbundenen Stromspeisung, wobei das mindestens eine Leuchtenmodul seitliche Stromabnehmer aufweist und wobei die Stäbe so angeordnet sind, dass sie das Leuchtenmodul zwischen sich einklemmen und dabei die Stromabnehmer des mindestens einen Leuchtenmoduls kontaktieren. Dadurch kann das Leuchtenmodul über die Stäbe effizient mit Strom versorgt werden. Die Halterung kann freistehend oder an einer Tragstruktur wie beispielsweise einer Decke befestigt ausgestaltet sein. Das Leuchtenmodul kann frei zwischen jeweils mindesten zwei benachbarten Stäben positioniert sein. Insbesondere bei der Verwendung von mehreren Leuchtenmodulen in der Leuchteneinrichtung ermöglicht dies, eine flexibel gestaltbare Anordnung. Die Leuchteneinrichtung kann so für verschieden Anwendungen angepasst werden.

Erfindungsgemäss umfasst die Leuchteneinrichtung eine Mehrzahl von identischen Leuchtenmodulen, wobei die Mehrzahl von Leuchtenmodulen miteinander zu einem Netzwerk verbunden ist, in dem jedes der Leuchtenmodule einen Knoten bildet. Auf diese Weise kann die Leuchteneinrichtung als pixelbasiertes System realisiert sein. Dies ermöglicht eine vielseitige und variable Anwendung des Leuchtensystems. Die Leuchtenmodule können über das Netzwerk untereinander kommunizieren und Informationen austauschen.

Ein anderer Aspekt der Erfindung betrifft ein Verfahren zur Steuerung einer Leuchteneinrichtung zum Ausleuchten eines Zielraums mit einer Mehrzahl von identischen Leuchtenmodulen, die jeweils eine dem Zielraum zugewandte Vorderseite und eine dem Zielraum abgewandte Rückseite aufweisen und ein zum Abstrahlen von der Vorderseite angeordnetes vorderseitiges Leuchtmittel, ein zum Abstrahlen von der Rückseite angeordnetes rückseitiges Leuchtmittel und eine Steuereinheit umfassen, wobei die Steuereinheit dazu ausgestaltet ist, die vorderseitigen Leuchtmittel und die rückseitigen Leuchtmittel einzustellen, wobei die Mehrzahl von Leuchtenmodulen miteinander zu einem Netzwerk verbunden sind, in dem jedes der Leuchtenmodule einen Knoten bildet, aufweisend die Schritte: Anordnen eines Kalibrierungsgeräts in dem Zielraum, Kalibrieren der Mehrzahl von Leuchtenmodulen auf ein voreinstellbares Lichtniveau, dynamisches Einstellen der vorderseitigen Leuchtmittel zur Darstellung von Informationen, und an die dynamisch eingestellten vorderseitigen Leuchtmittel angepasstes Einstellen der rückseitigen Leuchtmittel, so dass das kalibrierte Lichtniveau der Mehrzahl von Leuchtenmodulen konstant ist wobei bei einer Änderung des vorderseitigen Leuchtmittels das rückseitige Leuchtmittel umgekehrt proportional zur Änderung des vorderseitigen Leuchtmittels geändert wird.

Die Schritte des Kalibrierens, des dynamischen Einstellens und des angepassten Einstellens können insbesondere von der Steuereinheit des Leuchtenmoduls in beliebiger Reihenfolge durchgeführt werden. Alternativ dazu können sie auch von einer externen Steuereinheit durchgeführt werden, die mit der Steuereinheit des Leuchtenmoduls verbunden ist. Die externe Steuereinheit übermittelt in einer solchen Anordnung Signale an die Steuereinheit des mindestens einen Leuchtenmoduls, auf Grundlage derer diese dann die vorder- und rückseitigen Leuchtmittel einstellt. Das erfindungsgemässe Verfahren ermöglicht es die Leuchteigenschaften im Zielraum auf effiziente Weise so beeinflussen, dass eine Beeinträchtigung der Ausleuchtung des Zielraums minimiert ist.

In diesem Verfahren setzt sich das Lichtniveau vorzugsweise aus einem Anteil des vom vorderseitigen Leuchtmittel abgestrahlten Lichts und einem Anteil des vom rückseitigen Leuchtmittel abgestrahlten und reflektierten Lichts zusammen, wobei ein Verhältnis vom Anteil des vom rückseitigen Leuchtmittel abgestrahlten und reflektierten Lichts zum Anteil des vom vorderseitigen Leuchtmittel abgestrahlten Lichts konstant gehalten wird. Indem dieses Verhältnis konstant gehalten ist, kann auch das Lichtniveau im Zielraum auf effiziente Weise konstant gehalten werden.

Erfindungsgemäss entspricht in dem Verfahren der Anteil des vom rückseitigen Leuchtmittel abgestrahlten und reflektierten Lichts dem Produkt eines konstanten Faktors und des Anteils vom vorderseitigen Leuchtmittel abgestrahlten Lichts. Dabei wird bei einer Änderung des vorderseitigen Leuchtmittels das rückseitige Leuchtmittel vorzugsweise umgekehrt proportional zur Änderung des vorderseitigen Leuchtmittels geändert.

Kurze Beschreibung der Zeichnungen

Weitere vorteilhafte Ausgestaltungen der Erfindung ergeben sich aus der nachfolgenden Beschreibung von Ausführungsbeispielen der Erfindung mithilfe der schematischen Zeichnung. Insbesondere werden im Folgenden die erfindungsgemässe Leuchteneinrichtung und das erfindungsgemässe Verfahren unter Bezugnahme auf die beigefügten Zeichnungen anhand von Ausführungsbeispielen detaillierter beschrieben. Es zeigen:

Fig. 1 eine schematische Querschnittsansicht eines Leuchtenmoduls eines ersten Ausführungsbeispiels einer erfindungsgemässen Leuchteneinrichtung;

Fig. 2 eine weitere schematische Querschnittsansicht des Leuchtenmoduls von Fig. 1;

Fig. 3 eine andere weitere schematische Querschnittsansicht des Leuchtenmoduls von Fig. 1;

Fig. 4 eine erste mögliche Anordnung mehrerer Leuchtenmodule der Leuchteneinrichtung von Fig. 1;

Fig. 5 eine zweite mögliche Anordnung mehrerer Leuchtenmodule der Leuchteneinrichtung von Fig. 1;

Fig. 6 eine schematische Querschnittsansicht zweier Leuchtenmodule eines zweiten Ausführungsbeispiels einer erfindungsgemässen Leuchteneinrichtung;

Fig. 7 eine schematische Querschnittsansicht zweier Leuchtenmodule eines dritten Ausführungsbeispiels einer erfindungsgemässen Leuchteneinrichtung

Fig. 8 eine schematische Frontansicht einer Halterung für Leuchtenmodule einer erfindungsgemässen Leuchteneinrichtung; und
Fig. 9 eine schematische Seitenansicht der Halterung von Fig. 8.

Wege zur Ausführung der Erfindung

Bestimmte Ausdrücke werden in der folgenden Beschreibung aus praktischen Gründen verwendet und sind nicht einschränkend zu verstehen. Die Wörter "rechts", "links", "unten" und "oben" bezeichnen Richtungen in der Zeichnung, auf die Bezug genommen wird. Die Ausdrücke "nach innen", "nach aussen" "unterhalb", "oberhalb", "links", "rechts" oder ähnliche werden zur Beschreibung der Anordnung bezeichneter Teile zueinander, der Bewegung bezeichneter Teile zueinander und der Richtungen hin zum oder weg vom geometrischen Mittelpunkt der Leuchteneinrichtung sowie benannter Teile derselben wie in den Fig. dargestellt verwendet. Diese räumlichen Relativangaben umfassen auch andere Positionen und Ausrichtungen als die in den Fig. dargestellten. Zum Beispiel wenn ein in den Fig. dargestelltes Teil umgedreht wird, sind Elemente oder Merkmale, die als "unterhalb" beschrieben sind, dann "oberhalb". Die Terminologie umfasst die oben ausdrücklich erwähnten Wörter, Ableitungen von denselben und Wörter ähnlicher Bedeutung.

Um Wiederholungen in den Fig. und der zugehörigen Beschreibung der verschiedenen Aspekte und Ausführungsbeispielen zu vermeiden, sollen bestimmte Merkmale als gemeinsam für verschieden Aspekte und Ausführungsbeispiele verstanden werden. Das Weglassen eines Aspekts in der Beschreibung oder einer Fig. lässt nicht darauf schliessen, dass dieser Aspekt in dem zugehörigen Ausführungsbeispiel fehlt. Vielmehr kann ein solches Weglassen der Klarheit und dem Verhindern von Wiederholungen dienen. In diesem Zusammenhang gilt für die gesamte weitere Beschreibung folgende Festlegung: Sind in einer Figur zum Zweck zeichnerischer Eindeutigkeit Bezugszeichen enthalten, aber im unmittelbar zugehörigen Beschreibungstext nicht erwähnt, so wird auf deren Erläuterung in vorangehenden Figurenbeschreibungen Bezug genommen. Sind ausserdem im unmittelbar zu einer Figur gehörigen Beschreibungstext Bezugszeichen erwähnt, die in der zugehörigen Figur nicht enthalten sind, so wird auf die vorangehenden und nachstehenden Figuren verwiesen. Ähnliche Bezugszeichen in zwei oder mehreren Fig. stehen für ähnliche oder gleiche Elemente.

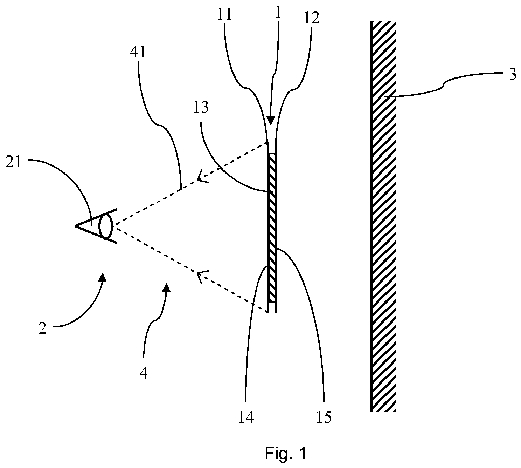

In Fig. 1 ist eines von mehreren Leuchtenmodulen 1 eines ersten Ausführungsbeispiels einer erfindungsgemässen Leuchteneinrichtung gezeigt. Das Leuchtenmodul 1 umfasst eine vordere organische Lichtdiode 11 (OLED) als vorderseitiges Leuchtmittel, eine hintere OLED 12 als rückseitiges Leuchtmittel und eine Platine 13, die in Sandwichbauweise zwischen der vorderen OLED 11 und der hinteren OLED 12 eingeklemmt ist. Die lichtemittierende äussere Oberfläche der vorderen OLED 11 bildet eine Vorderseite 14 des Leuchtenmoduls 1 und die lichtemittierende äussere Oberfläche der hinteren OLED 12 eine Rückseite 15 des Leuchtenmoduls 1.

Das Leuchtenmodul 1 ist in einem vorbestimmten Abstand von einer Wand 3 so befestigt, dass die Rückseite 15 der Wand 3 zu- und die Vorderseite 14 der Wand 3 abgewandt ist. Die Vorderseite 14 des Leuchtenmoduls 1 ist einem Zielraum 2 zugewandt, der von der Leuchteneinrichtung ausgeleuchtet werden soll. Im Zielraum 2 befindet sich ein Beobachter beziehungsweise ein Kalibrierungsgerät 21.

Die Platine 13 des Leuchtenmoduls ist mit verschiedenen elektronischen Komponenten zum Betreiben des Leuchtenmoduls bestückt. Insbesondere befinden sich auf der Platine 13 ein Prozessor, ein Arbeitsspeicher und ein Datenspeicher, die zusammen von einer Steuereinheit des Leuchtenmoduls 1 umfasst sind. Weiter ist die Platine 13 mit einem WLAN-Adapter als Internetschnittstelle und als Schnittstelle für das Kalibrierungsgerät 21, einem Set von Sensoren und Betriebskomponenten für das Betreiben der vorderen OLED 11 und der hinteren OLED 12 bestückt.

Wie in der Fig. 1 dargestellt strahlt die vordere OLED 11 Vorderlicht 4 in eine der Wand 3 abgewandten Richtung in einen Vorderraum des Leuchtenmoduls 1 ab. Dabei wird ein Anteil 41 des von der vorderen OLED 11 abgestrahlten Lichts beziehungsweise Vorderlichts 4 in den Zielraum 2 gestrahlt und kann vom Kalibrierungsgerät 21 erfasst werden. Die hintere OLED 12 strahlt im in der Fig. 1 gezeigten Zustand des Leuchtenmoduls 1 kein Licht ab.

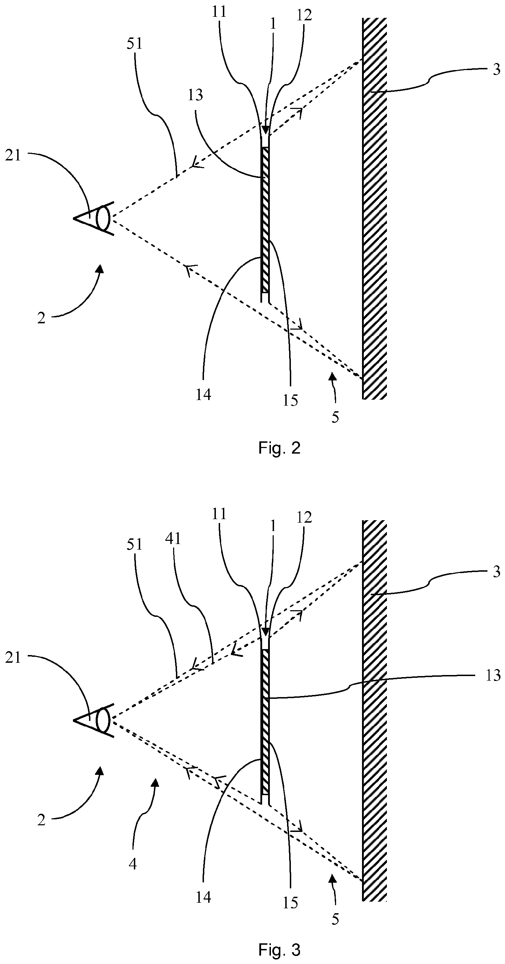

Wie in der Fig. 2 ersichtlich strahlt die hintere OLED 12 Rücklicht 5 auf die Wand 3 zu, das in wesentlichem Umfang von der Wand 3 reflektiert wird. Ein Anteil 51 des von der Wand 3 reflektierten Rücklichts 5 wird dabei in den Zielraum 2 umgeleitet und kann vom Kalibrierungsgerät 21 erfasst werden. Die vordere OLED 11 strahlt im in der Fig. 2 gezeigten Zustand des Leuchtenmoduls 1 kein Licht ab.

In der Fig. 3 ist das Leuchtenmodul 1 in einem Zustand gezeigt, in dem sowohl die vordere OLED 11 als auch die hintere OLED 12 Licht abstrahlen. Dabei ist ersichtlich, dass im Zielraum 2 der Anteil 41 des Vorderlichts 4 und der Anteil 51 des reflektierten Rücklichts 5 zusammenkommen. Die beiden Anteile 41, 51 sind zusammen massgebend für ein im Zielraum 2 vorhandenes Lichtniveau.

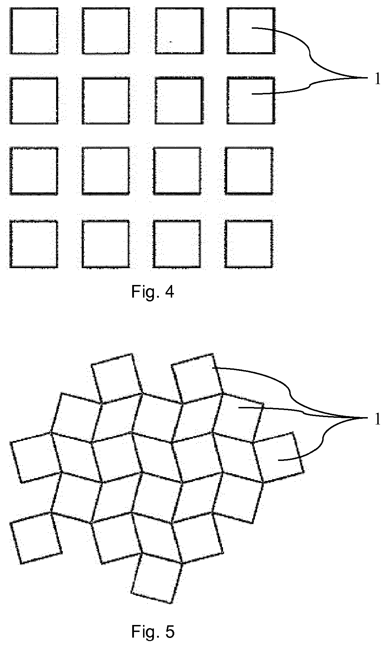

In Fig. 4 sind die Leuchtenmodule 1 in einer ersten Anordnung dargestellt. Dabei ist ersichtlich, dass die Leuchteneinrichtung sechzehn Leuchtenmodule 1 aufweist, die modular in bevorzugter Weise zusammengestellt werden können. In der ersten Anordnung sind die Leuchtenmodule 1 regelmässig in vier Reihen und vier Spalten a jeweils vier Leuchtenmodule 1 platziert. So bilden sie zusammen ein quadratisches Feld, wobei die einzelnen Leuchtenmodule 1 pixelartig zusammenwirken.

Fig. 5 zeigt die sechzehn Leuchtenmodule 1 in einer zweiten Anordnung. Dabei sind die einzelnen Leuchtenmodule 1 versetzt und verdreht zueinander platziert. Die Leuchtenmodule 1 können in beliebiger Weise kombiniert werden, sodass die Leuchteneinrichtung einen hohen Grad an Gestaltungsfreiheit ermöglicht.

Im Betrieb der Leuchteneinrichtung bilden die Leuchtenmodule 1 zusammen ein drahtloses Netzwerk, wobei die einzelnen Leuchtenmodule 1 jeweils Knoten des Netzwerks sind, die über ihr WLAN-Adapter miteinander verbunden sind. Die Leuchteneinrichtung kann beliebig mit weiteren Leuchtenmodulen 1 ergänzt werden oder es können Leuchtenmodule 1 entfernt werden. Ist die Anordnung der Leuchtenmodule wie gewünscht erfolgt, so werden die Leuchtenmodule kalibriert. Dazu werden die vorderen OLED 11 und die hinteren OLED 12 der Leuchtenmodule 1 so eingestellt und adaptiert, bis im Zielraum 2 ein bevorzugtes Lichtniveau erreicht ist. Dieses Lichtniveau wird vom Kalibrierungsgerät 21, das beispielsweise ein Smartphone sein kann, erfasst und mittels geeigneter Signale an die Steuereinheiten der einzelnen Leuchtenmodule 1 gesendet. Über die WLAN-Adapter und die Sensoren der Leuchtenmodule 1 ermitteln die Steuereinheiten darzustellende Informationen. Indem die vorderen OLED 11 der Leuchtenmodule 1 von den Steuereinheiten eingestellt werden, werden die Informationen oder Teile davon in den Zielraum projiziert. Auf diese Weise werden die vorderen OLED 11 dynamisch und automatisch eingestellt und die Informationen können vom Beobachter im Zielraum erfasst werden.

Gleichzeitig stellen die Steuereinheiten auch die hinteren OLED 12 der Leuchtenmodule 1 ein. Die hinteren OLED werden so an die jeweils zugehörige vordere OLED 11 angepasst eingestellt, dass das kalibrierte Lichtniveau im Zielraum 2 konstant gehalten wird. Insbesondere wird ein Verhältnis des Anteils 51 des von der hinteren OLED 12 abgestrahlten und reflektierten Lichts 5 zum Anteil des von der vorderen OLED 11 abgestrahlten Lichts konstant gehalten. Wird also beispielsweise die Lichtintensität der vorderen OLED 11 eines der Leuchtenmodule 1 zur Darstellung einer Information erhöht, so wird die Lichtintensität der hinteren OLED 12 des gleichen Leuchtenmoduls 1 entsprechend vermindert.

Die Anpassung der hinteren OLED 12 kann verhältnismässig effizient erfolgen, indem der Anteil 51 des von der hinteren OLED 12 abgestrahlten und reflektierten Lichts 5 dem Produkt eines konstanten Faktors und des Anteils 41 des von der vorderen OLED 11 abgestrahlten Lichts 4 entspricht. Dabei wird bei einer Änderung der vorderen OLED 11 die hintere OLED 12 umgekehrt proportional zur Änderung der vorderen OLED 11 geändert.

Die Steuereinheiten der einzelnen Leuchtenmodule 1 können jeweils so programmiert beziehungsweise geschaltet sein, dass zur Beibehaltung des Lichtniveaus im Zielraum 2 bei änderndem von der vorderen OLED 11 abgegebenem Licht 4 das von der hinteren OLED 12 abzugebende Licht 5 über eine mathematische Gleichung berechnet werden. Beispielsweise kann eine passende mathematische Gleichung wie folgt hergeleitet werden:

Die involvierten Grössen sind zum einen das von der vorderen OLED 11 emittierte Lichtniveau S1 und das von der hinteren OLED 12 emittierte Lichtniveau S2 und zum anderen der im Zielraum 2 erfasste Anteil $L1$ des von der vorderen OLED 11 erzeugten Lichtniveaus und der im Zielraum 2 erfasste Anteil $L2$ des von der hinteren OLED 12 erzeugten Lichtniveaus. Werden die beiden Lichtniveaus S1 und S2 um ein gleiches Mass verändert, so erfolgen typischerweise unterschiedliche Änderungen der Anteile $L1$ und $L2$, die im Zielraum 2 erfasst werden. Es gilt also $k = \Delta L1/\Delta L2$, wobei die Konstante k typischerweise grösser als 1 ist, da ein kleinerer Anteil des von der hinteren OLED 12 erzeugten Lichts den Zielraum erreicht als von der vorderen OLED 11.

Die Konstante $k$ ist die zu kalibrierende Grösse des Systems. Damit die Änderungen der im Zielraum 2 erfassten Anteile $L1$ und $L2$ der von den beiden OLED 11, 12 erzeugten Lichtniveaus gleich sind, ist $\Delta S2 = k*\Delta S1$. Um das Lichtniveau im Zielraum 2 konstant zu halten, ist eine Änderung des Anteils $L1$ des von der vorderen OLED 11 erzeugten Lichtniveaus im Zielraum 2 über die Zeit durch eine entsprechende Änderung des Anteils $L2$ des von der hinteren OLED 12 erzeugten Lichtniveaus im Zielraum 2 auszugleichen. Es gilt $d(L1)/dt = -d(L2)/dt$. Die beiden OLED 11, 12 können also von der Steuereinheit entsprechend der folgenden Gleichung eingestellt werden, um das Lichtniveau im Zielraum 2 konstant zu halten:

$$d(S2)/dt = -k*d(S1)/dt$$

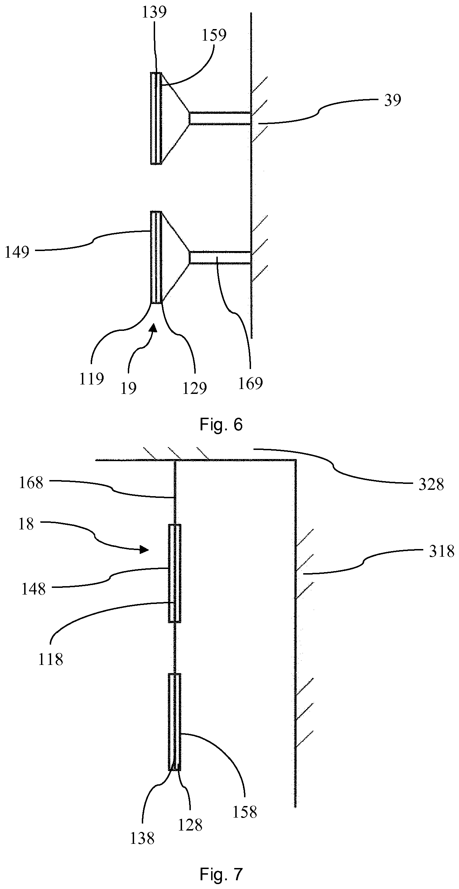

In Fig. 6 sind zur Illustration einer möglichen Befestigungsweise zwei von mehreren Leuchtenmodulen 19 eines zweiten Ausführungsbeispiels einer erfindungsgemässen Leuchteneinrichtung gezeigt. Über weite Strecken sind die Leuchtenmodule 19 und ihre Funktionsweise analog zu den Leuchtenmodulen 1 der vorangehenden Fig. 1 bis 5.

Die Leuchtenmodule 19 umfassen jeweils eine vordere OLED 119 als vorderseitiges Leuchtmittel, eine hintere OLED 129 als rückseitiges Leuchtmittel und eine Platine 139, die in Sandwichbauweise zwischen der vorderen OLED 119 und der hinteren OLED 129 eingeklemmt ist. Die lichtemittierende äussere Oberfläche der vorderen OLED 119 bildet eine Vorderseite 149 des zugehörigen Leuchtenmoduls 19 und die lichtemittierende äussere Oberfläche der hinteren OLED 129 eine Rückseite 159 des zugehörigen Leuchtenmoduls 19.

Die Leuchtenmodule 19 umfassen jeweils eine Montageeinrichtung 169 mit einem Pfosten und einer offenen OLED-Fassung. Die Pfosten der Montageeinrichtungen 169 der Leuchtenmodule 19 sind jeweils horizontal an einer Wand 39 montiert. Die OLED-Fassungen der Montageeinrichtungen 169 der Leuchtenmodule 19 halten die hinteren OLED 129 in einer offenen Weise, sodass ihre Lichtabstrahlung in Richtung der Wand 39 möglichst wenig beeinträchtigt wird.

Fig. 7 zeigt zur Illustration einer alternativen möglichen Befestigungsweise zwei von mehreren Leuchtenmodulen 18 eines dritten Ausführungsbeispiels einer erfindungsgemässen Leuchteneinrichtung. Über weite Strecken sind die Leuchtenmodule 19 und ihre Funktionsweise analog zu den Leuchtenmodulen 1 der vorangehenden Fig. 1 bis 5.

Die Leuchtenmodule 18 umfassen jeweils eine vordere OLED 118 als vorderseitiges Leuchtmittel, eine hintere OLED 128 als rückseitiges Leuchtmittel und eine Platine 138, die in Sandwichbauweise zwischen der vorderen OLED 118 und der hinteren OLED 128 eingeklemmt ist. Die lichtemittierende äussere Oberfläche der vorderen OLED 118 bildet eine Vorderseite 148 des zugehörigen Leuchtenmoduls 18 und die lichtemittierende äussere Oberfläche der hinteren OLED 128 eine Rückseite 158 des zugehörigen Leuchtenmoduls 18.

Die Leuchtenmodule 18 umfassen weiter jeweils einen Montagedraht 168. Der Montagedraht 168 ist an einer Decke 328 befestigt und hängt vertikal nach unten. Die Leuchtenmodule 18 sind an den Montagedraht 168 angeklemmt und so horizontal ausgerichtet, dass die Lichtabstrahlung der hinteren OLED 128 in Richtung einer Wand 318 und die Lichtabstrahlung der vorderen OLED 118 von der Wand 318 weg erfolgt. Die Energieeinspeisung beziehungsweise Stromzufuhr zum Betrieb der Leuchtenmodule 18 erfolgt über den Montagedraht 168.

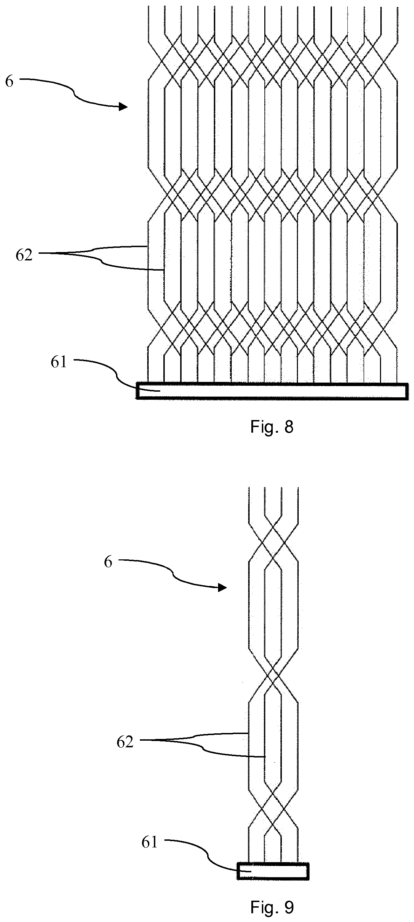

In Fig. 8 und Fig. 9 ist eine Halterung 6 gezeigt, wie sie für die Montage von Leuchtenmodulen 1, 18, 19 der in den vorstehenden Fig. gezeigten Art geeignet ist. Die Halterung 6 umfasst eine Vielzahl von elektrisch leitenden Stäben 62, die auf einem Sockel 61 befestigt sind. Die Stäbe 62 erstrecken sich vom Sockel 61 aus nach oben und weisen jeweils vier vertikale und drei abgeschrägte diagonale Abschnitte auf. Der Sockel 61 ist zur Energiezufuhr als Stromspeisung ausgebildet.

Im Betrieb werden Leuchtenmodule zwischen jeweils zwei benachbarten Stäben 62 eingeschoben und geklemmt. Sie können an einer beliebigen Stelle in der Halterung 6 eingesetzt werden, was eine grosse Gestaltungsfreiheit ermöglicht. Die Leuchtenmodule umfassen seitliche Kontakte als Stromabnehmer, welche die Stäbe 62 kontaktieren, wenn sie dazwischen eingeklemmt sind. Dadurch können die Leuchtenmodule auf einfache Weise über die Stäbe 62 mit Strom versorgt werden. Die Verwendung von OLED-Technologien zur Lichterzeugung ermöglicht, dass die ganze Leuchteneinrichtung in einem Niederspannungsbereich betrieben wird. Die Spannung kann dabei so tief sein, dass auf Schutzmassnahmen hinsichtlich der stromführenden Stäbe 62 verzichtet werden kann.

Obwohl die Erfindung mittels der Figuren und der zugehörigen Beschreibung dargestellt und detailliert beschrieben ist, sind diese Darstellung und diese detaillierte Beschreibung illustrativ und beispielhaft zu verstehen und nicht als die Erfindung einschränkend. Um die Erfindung nicht zu verklären, können in gewissen Fällen wohlbekannte Strukturen und Techniken nicht im Detail gezeigt und beschrieben sein. Es versteht sich, dass Fachleute Änderungen und Abwandlungen machen können, ohne den Umfang der folgenden Ansprüche zu verlassen.

Die vorliegende Offenbarung umfasst auch Ausführungsformen mit jeglicher Kombination von Merkmalen, die vorstehend oder nachfolgend zu verschiedenen Ausführungsformen genannt oder gezeigt sind. Sie umfasst ebenfalls einzelne Merkmale in den Figuren, auch wenn sie dort im Zusammenhang mit anderen Merkmalen gezeigt sind und/oder vorstehend oder nachfolgend nicht genannt sind. Auch können die in den Figuren und der Beschreibung beschriebenen Alternativen von Ausführungsformen und einzelne Alternativen deren Merkmale vom Erfindungsgegenstand beziehungsweise von den offenbarten Gegenständen ausgeschlossen sein. Die Offenbarung umfasst Ausführungsformen, die ausschliesslich die in den Ansprüchen beziehungsweise in den Ausführungsbeispielen beschriebenen Merkmale umfasst sowie auch solche, die zusätzliche andere Merkmale umfassen.

Im Weiteren schliesst der Ausdruck "umfassen" und Ableitungen davon andere Elemente oder Schritte nicht aus. Ebenfalls schliesst der unbestimmte Artikel "ein" bzw. "eine" und Ableitungen davon eine Vielzahl nicht aus. Die Funktionen mehrerer in den Ansprüchen aufgeführter Merkmale können durch eine Einheit beziehungsweise einen Schritt erfüllt sein. Die Begriffe "im Wesentlichen", "etwa", "ungefähr" und dergleichen in Verbindung mit einer Eigenschaft beziehungsweise einem Wert definieren insbesondere auch genau die Eigenschaft beziehungsweise genau den Wert. Die Begriffe "etwa" und "ungefähr" im Zusammenhang mit einem gegebenen Zahlenwert oder -bereich kann sich auf einen Wert beziehungsweise Bereich beziehen, der innerhalb 20%, innerhalb 10%, innerhalb 5% oder innerhalb 2% des gegebenen Werts beziehungsweise Bereichs liegt.

## Patentansprüche

1. Leuchteneinrichtung zum Ausleuchten eines Zielraums (2) mit mindestens einem Leuchtenmodul (1; 18; 19), das

    eine dem Zielraum (2) zugewandte Vorderseite (14; 148; 149) und eine dem Zielraum (2) abgewandte Rückseite (15; 158; 159) aufweist und ein zum Abstrahlen von der Vorderseite (14; 148; 149) angeordnetes vorderseitiges Leuchtmittel (11; 118; 119), ein zum Abstrahlen von der Rückseite (15; 158; 159) angeordnetes rückseitiges Leuchtmittel (12; 128; 129) und eine Steuereinheit umfasst,
wobei die Steuereinheit des mindestens einen Leuchtenmoduls (1; 18; 19) dazu ausgebildet ist, das vorderseitige Leuchtmittel (11; 118; 119) und das rückseitige Leuchtmittel (12; 128; 129) einzustellen,
wobei die Steuereinheit des mindestens einen Leuchtenmoduls (1; 18; 19) eine Schnittstelle umfasst, über welche die Leuchteneinrichtung mit einem im Zielraum (2) angeordneten Kalibrierungsgerät (21) verbindbar ist,
wobei die Steuereinheit des mindestens einen Leuchtenmoduls (1; 18; 19) dazu ausgestaltet ist,

    über die Schnittstelle ein Kalibrierungssignal vom Kalibrierungsgerät (21) zu empfangen,
    das mindestens eine Leuchtenmodul (1; 18; 19) unter Auswertung des Kalibrierungssignals auf ein voreinstellbares Lichtniveau zu kalibrieren,
    das vorderseitige Leuchtmittel (11; 118; 119) zur Darstellung von Informationen dynamisch einzustellen und
    das rückseitige Leuchtmittel (12; 128; 129) an das dynamisch eingestellte vorderseitige Leuchtmittel (11; 118; 119) angepasst einzustellen, so dass das kalibrierte Lichtniveau konstant ist,

wobei die Steuereinheit des mindestens einen Leuchtenmoduls (1; 18; 19) weiterhin dazu ausgestaltet ist, bei einer Änderung des vorderseitigen Leuchtmittels (11; 118; 119) das rückseitige Leuchtmittel (12; 128; 129) umgekehrt proportional zur Änderung des vorderseitigen Leuchtmittels (11, 118; 119) zu ändern,
wobei die Leuchteneinrichtung eine Mehrzahl von identischen Leuchtenmodulen (1; 18; 19) umfasst und
wobei die Mehrzahl von Leuchtenmodulen (1; 18; 19) miteinander zu einem Netzwerk verbunden sind, in dem jedes der Leuchtenmodule (1; 18; 19) einen Knoten bildet.

2. Leuchteneinrichtung nach Anspruch 1, bei der sich das Lichtniveau aus einem Anteil (41) des vom vorderseitigen Leuchtmittel (11; 118; 119) abgestrahlten Lichts (4) und einem Anteil (51) des vom rückseitigen Leuchtmittel (12; 128; 129) abgestrahlten und reflektierten Lichts (5) zusammensetzt, wobei die Steuereinheit des mindestens einen Leuchtenmoduls (1; 18; 19) dazu ausgestaltet ist, einen Faktor des Anteils (51) des vom rückseitigen Leuchtmittel (12; 128; 129) abgestrahlten und reflektierten Lichts (5) zum Anteil (41) des vom vorderseitigen Leuchtmittel (11; 118; 119) abgestrahlten Lichts (4) konstant zu halten.

3. Leuchteneinrichtung nach Anspruche 1 oder 2, bei der die Steuereinheit des mindestens einen Leuchtenmoduls (1; 18; 19) eine Platine (13; 138; 139) mit einem Prozessor, einem Arbeitsspeicher und einem Datenspeicher umfasst, wobei die Platine (13; 138; 139) zwischen dem vorderseitigen Leuchtmittel (11; 118; 119) und dem rückseitigen Leuchtmittel (12; 128; 129) angeordnet ist.

4. Leuchteneinrichtung nach einem der vorangehenden Ansprüche, bei dem das vorderseitige Leuchtmittel (11; 118; 119) des mindestens einen Leuchtenmoduls (1; 18; 19) eine organische Leuchtdiode umfasst, bei dem das rückseitige Leuchtmittel (12; 128; 129) des mindestens einen Leuchtenmoduls (1; 18; 19) eine organische Leuchtdiode umfasst oder bei dem das vorderseitige Leuchtmittel (11; 118; 119) des mindestens einen Leuchtenmoduls (1; 18; 19) und das rückseitige Leuchtmittel (12; 128; 129) des mindestens einen Leuchtenmoduls (1; 18; 19) jeweils eine organische Leuchtdiode umfassen.

5. Leuchteneinrichtung nach einem der vorangehenden Ansprüche, bei der das vorderseitige Leuchtmittel (11; 118; 119) des mindestens einen Leuchtenmoduls (1; 18; 19) bewegungssensitiv ist, wobei die Steuereinheit des mindestens einen Leuchtenmoduls (1; 18; 19) dazu ausgestaltet ist, das vorderseitige Leuchtmittel (11; 118; 119) und das rückseitige Leuchtmittel (12; 128; 129) unter Auswertung eines vom vorderseitigen Leuchtmittel (11; 118; 119) erfassten Steuersignals einzustellen.

6. Leuchteneinrichtung nach einem der vorangehenden Ansprüche, bei dem die Steuereinheit des mindestens einen Leuchtenmoduls (1; 18; 19) eine Internetschnittstelle umfasst.

7. Leuchteneinrichtung nach einem der vorangehenden Ansprüche, bei dem die Steuereinheit des mindestens einen Leuchtenmoduls (1; 18; 19) mindestens einen Sensor umfasst, wobei die Steuereinheit dazu ausgestaltet ist, das vorderseitige Leuchtmittel (11; 118; 119) und das rückseitige Leuchtmittel (12; 128; 129) unter Auswertung eines vom Sensor erfassten Signals einzustellen, wobei der mindestens eine Sensor vorzugsweise ein Sensor der Gruppe von Sensoren bestehend aus Helligkeitssensoren, Anwesenheitssensoren, Infrarotsensoren, akustische Sensoren, thermische Sensoren, Mikrofonen, Thermometern, Abstandssensoren, Beschleunigungssensoren und Kameras oder eine beliebige Kombination davon ist.

8. Leuchteneinrichtung nach einem der vorangehenden Ansprüche, die einen Periphersensor aufweist, wobei die Steuereinheit des mindestens einen Leuchtenmoduls (1; 18; 19) dazu ausgestaltet ist, das vorderseitige Leuchtmittel (11; 118; 119) und das rückseitige Leuchtmittel (12; 128; 129) unter Auswertung eines vom Periphersensor erfassten Signals einzustellen.

9. Leuchteneinrichtung nach einem der vorangehenden Ansprüche, die eine Halterung (6) mit einer Mehrzahl von elektrisch leitenden Stäben (62) und eine mit den Stäben (62) verbundenen Stromspeisung (61) umfasst, wobei das mindestens eine Leuchtenmodul (1; 18; 19) seitliche Stromabnehmer aufweist und wobei die Stäbe (62) so angeordnet sind, dass sie das mindestens eine Leuchtenmodul (1; 18; 19) zwischen sich einklemmen und dabei die Stromabnehmer des mindestens einen Leuchtenmoduls (1; 18; 19) kontaktieren.

10. Verfahren zur Steuerung einer Leuchteneinrichtung zum Ausleuchten eines Zielraums (2) mit einer Mehrzahl von identischen Leuchtenmodulen (1; 18; 19), die jeweils eine dem Zielraum (2) zugewandte Vorderseite (14; 148; 149) und eine dem Zielraum (2) abgewandte Rückseite (15; 158; 159) aufweisen und ein zum Abstrahlen von der Vorderseite (14; 148; 149) angeordnetes vorderseitiges Leuchtmittel (11; 118; 119), ein zum Abstrahlen von der Rückseite (15; 158; 159) angeordnetes rückseitiges Leuchtmittel (12; 128; 129) und eine Steuereinheit umfassen, wobei die Steuereinheit dazu ausgestaltet ist, die vorderseitigen Leuchtmittel (11; 118; 119) und die rückseitigen Leuchtmittel (12; 128; 129) einzustellen, wobei die Mehrzahl von Leuchtenmodulen (1; 18; 19) miteinander zu einem Netzwerk verbunden sind, in dem jedes der Leuchtenmodule (1; 18; 19) einen Knoten bildet, aufweisend die Schritte:

    Anordnen eines Kalibrierungsgeräts (21) in dem Zielraum (2),
    Kalibrieren der Mehrzahl von Leuchtenmodulen (1; 18; 19) auf ein voreinstellbares Lichtniveau,
    dynamisches Einstellen der vorderseitigen Leuchtmittel zur Darstellung von Informationen, und
    an die dynamisch eingestellten vorderseitigen Leuchtmittel (11; 118; 119) angepasstes Einstellen der rückseitigen Leuchtmittel, so dass das kalibrierte Lichtniveau der Mehrzahl von Leuchtenmodulen (1; 18; 19) konstant ist wobei bei einer Änderung des vorderseitigen Leuchtmittels (11; 118; 119) das rückseitige Leuchtmittel (12; 128; 129) umgekehrt proportional zur Änderung des vorderseitigen Leuchtmittels (11; 118; 119) geändert wird.

11. Verfahren nach Anspruch 10, bei dem sich das Lichtniveau aus einem Anteil (41) des vom vorderseitigen Leuchtmittel (11; 118; 119) abgestrahlten Lichts (4) und einem Anteil (51) des vom rückseitigen Leuchtmittel (12; 128; 129) abgestrahlten und reflektierten Lichts (5) zusammensetzt, wobei ein Verhältnis vom Anteil (51) des vom rückseitigen Leuchtmittel (12; 128; 129) abgestrahlten und reflektierten Lichts (5) zum Anteil (41) des vom vorderseitigen Leuchtmittel (11; 118; 119) abgestrahlten Lichts (4) konstant gehalten wird.

12. Verfahren nach Anspruch 10 oder 11, bei dem der Anteil (51) des vom rückseitigen Leuchtmittel (12; 128; 129) abgestrahlten und reflektierten Lichts (5) dem Produkt eines konstanten Faktors und des Anteils (41) des vom vorderseitigen Leuchtmittel (11; 118; 119) abgestrahlten Lichts (4) entspricht.


**Claims**

1. Lighting device for illuminating a target space (2), the lighting device having at least one lighting module (1; 18; 19), which

   has a front side (14; 148; 149) facing the target space (2) and a rear side (15; 158; 159) facing away from the target space (2), and
   comprising a front lighting means (11; 118; 119) arranged to emit light from the front side (14; 148; 149), a rear lighting means (12; 128; 129) arranged to emit light from the rear side (15; 158; 159), and a control unit,
   wherein the control unit of the at least one lighting module (1; 18; 19) is arranged to adjust the front lighting means (11; 118; 119) and the rear lighting means (12; 128; 129),
   wherein the control unit of the at least one lighting module (1; 18; 19) comprises an interface, via which the lighting device can be connected to a calibration apparatus (21) arranged in the target space (2),
   wherein the control unit of the at least one lighting module (1; 18; 19) is arranged

   to receive a calibration signal from the calibration apparatus (21) via the interface,
   to calibrate the at least one lighting module (1; 18; 19) to a pre-adjustable light level by evaluating the calibration signal,
   to dynamically adjust the front lighting means (11; 118; 119) to display information and
   to adaptively adjust the rear lighting means (12; 128; 129) to the dynamically adjusted front lighting means (11; 118; 119) so that the calibrated light level is constant,

   wherein the control unit of the at least one lighting module (1; 18; 19) further is configured, if the front lighting means (11; 118; 119) is changed, to change the rear lighting means (12; 128; 129) inversely proportionally to the change in the front lighting means (11; 118; 119),
   wherein the lighting device comprises a plurality of identical lighting modules (1; 18; 19), and
   wherein the plurality of lighting modules (1; 18; 19) are connected to one another to form a network in which each of the lighting modules (1; 18; 19) forms a node.

2. Lighting device according to claim 1, wherein the light level is composed of a portion (41) of the light (4) emitted by the front lighting means (11; 118; 119) and a portion (51) of the light (5) emitted and reflected by the rear lighting means (12; 128; 129), wherein the control unit of the at least one lighting module (1; 18; 19) is designed to keep a factor of the portion (51) of the light (5) emitted and reflected by the rear lighting means (12; 128; 129) to the portion (41) of the light (4) emitted by the front lighting means (11; 118; 119) constant.

3. Lighting device according to claim 1 or 2, wherein the control unit of the at least one lighting module (1; 18; 19) comprises a circuit board (13; 138; 139) with a processor, a working memory and a data memory, wherein the circuit board (13; 138; 139) is arranged between the front lighting means (11; 118; 119) and the rear lighting means (12; 128; 129).

4. Lighting device according to any of the preceding claims, wherein the front lighting means (11; 118; 119) of the at least one lighting module (1; 18; 19) comprises an organic light-emitting diode, wherein the rear lighting means (12; 128; 129) of the at least one lighting module (1; 18; 19) comprises an organic light-emitting diode, or wherein the front lighting means (11; 118; 119) of the at least one lighting module (1; 18; 19) and the rear lighting means (12; 128; 129) of the at least one lighting module (1; 18; 19) each comprise an organic light-emitting diode.

5. Lighting device according to any of the preceding claims, wherein the front lighting means (11; 118; 119) of the at least one lighting module (1; 18; 19) is motion-sensitive, wherein the control unit of the at least one lighting module (1; 18; 19) is designed to adjust the front lighting means (11; 118; 119) and the rear lighting means (12; 128; 129) by evaluating a control signal detected by the front lighting means (11; 118; 119).

6. Lighting device according to any of the preceding claims, wherein the control unit of the at least one lighting module (1; 18; 19) comprises an Internet interface.

7. Lighting device according to any of the preceding claims, wherein the control unit of the at least one lighting module (1; 18; 19) comprises at least one sensor, wherein the control unit is designed to adjust the front lighting means (11; 118; 119) and the rear lighting means (12; 128; 129) by evaluating a signal detected by the sensor, wherein the at least one sensor is preferably a sensor of the group of sensors consisting of brightness sensors, presence sensors, infrared sensors, acoustic sensors, thermal sensors, microphones, thermometers, distance sensors, acceleration sensors and cameras, or any combination thereof.

8. Lighting device according to any of the preceding claims, comprising a peripheral sensor, wherein the control unit of the at least one lighting module (1; 18; 19) is designed to adjust the front lighting means (11; 118; 119) and the rear lighting means (12; 128; 129) by evaluating a signal detected by the peripheral sensor.

9. Lighting device according to any of the preceding claims, comprising a holder (6) having a plurality of electrically conductive rods (62) and a power supply (61) connected to the rods (62), wherein the at least one lighting module (1; 18; 19) has lateral current collectors, and wherein the rods (62) are arranged such that they clamp the at least one lighting module (1; 18; 19) between them and thereby contact the current collectors of the at least one lighting module (1; 18; 19).

10. Method for controlling a lighting device for illuminating a target space (2), the lighting device having a plurality of identical lighting modules (1; 18; 19) which each have a front side (14; 148; 149) facing from the target space (2) and a rear side (15; 158; 159) facing away from the target space (2) and comprise a front lighting means (11; 118; 119), which is arranged for emitting light from the front side (14; 148; 149), a rear lighting means (12; 128; 129), which is arranged for emitting light from the rear side (15; 158; 159), and a control unit, wherein the control unit is designed to adjust the front lighting means (11; 118; 119) and the rear lighting means (12; 128; 129), wherein the plurality of lighting modules (1; 18; 19) are connected to one another to form a network in which each of the lighting modules (1; 18; 19) forms a node, the method having the steps of:

arranging a calibration apparatus (21) in the target space (2),
calibrating the plurality of lighting modules (1; 18; 19) to a pre-adjustable light level,
dynamically adjusting the front lighting means to display information, and
adaptively adjusting the rear lighting means to the dynamically adjusted front lighting means (11; 118; 119) so that the calibrated light level of the plurality of lighting modules (1; 18; 19) is constant, wherein, if the front lighting means (11; 118; 119) is changed, the rear lighting means (12; 128; 129) is changed inversely proportionally to the change in the front lighting means (11; 118; 119).

11. Method according to claim 10, wherein the light level is composed of a portion (41) of the light (4) emitted by the front lighting means (11; 118; 119) and a portion (51) of the light (5) emitted and reflected by the rear lighting means (12; 128; 129), wherein a ratio of the portion (51) of the light (5) emitted and reflected by the rear lighting means (12; 128; 129) to the portion (41) of the light (4) emitted by the front lighting means (11; 118; 119) is kept constant.

12. Method according to either claim 10 or claim 11, wherein the portion (51) of the light (5) emitted and reflected by the rear lighting means (12; 128; 129) corresponds to the product of a constant factor and the portion (41) of the light (4) emitted by the front lighting means (11; 118; 119).

**Revendications**

1. Dispositif d'éclairage permettant d'éclairer un espace cible (2), comportant au moins un module d'éclairage (1 ; 18 ; 19) qui

présente une face avant (14 ; 148 ; 149) tournée vers l'espace cible (2) et une face arrière (15 ; 158 ; 159) opposée à l'espace cible (2) et comprend un moyen d'éclairage avant (11 ; 118 ; 119) disposé de manière à émettre depuis la face avant (14 ; 148 ; 149), un moyen d'éclairage arrière (12 ; 128 ; 129) disposé de manière à émettre depuis la face arrière (15 ; 158 ; 159) et une unité de commande,
dans lequel l'unité de commande de l'au moins un module d'éclairage (1 ; 18 ; 19) est configurée pour régler le moyen d'éclairage avant (11 ; 118 ; 119) et le moyen d'éclairage arrière (12 ; 128 ; 129),
dans lequel l'unité de commande de l'au moins un module d'éclairage (1 ; 18 ; 19) comprend une interface par l'intermédiaire de laquelle le dispositif d'éclairage peut être connecté à un appareil d'étalonnage (21) disposé dans l'espace cible (2),
dans lequel l'unité de commande de l'au moins un module d'éclairage (1 ; 18 ; 19) est configurée

pour recevoir un signal d'étalonnage provenant de l'appareil d'étalonnage (21) par l'intermédiaire de l'interface,

pour calibrer l'au moins un module d'éclairage (1 ; 18 ; 19) à un niveau de lumière pouvant être préréglé en évaluant le signal d'étalonnage,

pour régler de manière dynamique le moyen d'éclairage avant (11 ; 118 ; 119) pour l'affichage d'informations et

pour régler le moyen d'éclairage arrière (12 ; 128 ; 129) de manière adaptée au moyen d'éclairage avant (11 ; 118; 119) réglé de manière dynamique, de sorte que le niveau de lumière calibré est constant,

dans lequel l'unité de commande de l'au moins un module d'éclairage (1 ; 18 ; 19) en outre est configurée pour modifier, en cas de modification du moyen d'éclairage avant (11 ; 118; 119), le moyen d'éclairage arrière (12 ; 128 ; 129) de manière inversement proportionnelle à la modification du moyen d'éclairage avant (11 ; 118 ; 119),

dans lequel le dispositif d'éclairage comprend une pluralité de modules d'éclairage (1 ; 18 ; 19) identiques, et

dans lequel la pluralité de modules d'éclairage (1 ; 18 ; 19) sont connectés entre eux pour former un réseau dans lequel chacun des modules d'éclairage (1 ; 18 ; 19) forme un noeud.

2. Dispositif d'éclairage selon la revendication 1, dans lequel le niveau de lumière se compose d'une proportion (41) de lumière (4) émise par le moyen d'éclairage avant (11 ; 118 ; 119) et d'une proportion (51) de lumière (5) émise et réfléchie par le moyen d'éclairage arrière (12 ; 128; 129), dans lequel l'unité de commande de l'au moins un module d'éclairage (1 ; 18; 19) est configurée pour maintenir constant un facteur de la proportion (51) de lumière (5) émise et réfléchie par le moyen d'éclairage arrière (12 ; 128 ; 129) par rapport à la proportion (41) de lumière (4) émise par le moyen d'éclairage avant (11 ; 118 ; 119).

3. Dispositif d'éclairage selon la revendication 1 ou 2, dans lequel l'unité de commande de l'au moins un module d'éclairage (1 ; 18 ; 19) comprend une carte de circuits imprimés (13 ; 138 ; 139) comportant un processeur, une mémoire de travail et une mémoire de données, dans lequel la carte de circuits imprimés (13 ; 138 ; 139) est disposée entre le moyen d'éclairage avant (11 ; 118 ; 119) et le moyen d'éclairage arrière (12 ; 128 ; 129).

4. Dispositif d'éclairage selon l'une des revendications précédentes, dans lequel le moyen d'éclairage avant (11 ; 118 ; 119) de l'au moins un module d'éclairage (1 ; 18 ; 19) comprend une diode électroluminescente organique, dans lequel le moyen d'éclairage arrière (12 ; 128 ; 129) de l'au moins un module d'éclairage (1 ; 18 ; 19) comprend une diode électroluminescente organique ou dans lequel le moyen d'éclairage avant (11 ; 118 ; 119) de l'au moins un module d'éclairage (1 ; 18 ; 19) et le moyen d'éclairage arrière (12 ; 128 ; 129) de l'au moins un module d'éclairage (1 ; 18 ; 19) comprennent respectivement une diode électroluminescente organique.

5. Dispositif d'éclairage selon l'une des revendications précédentes, dans lequel le moyen d'éclairage avant (11 ; 118 ; 119) de l'au moins un module d'éclairage (1 ; 18 ; 19) est sensible au mouvement, dans lequel l'unité de commande de l'au moins un module d'éclairage (1 ; 18 ; 19) est configurée pour régler le moyen d'éclairage avant (11 ; 118; 119) et le moyen d'éclairage arrière (12 ; 128 ; 129) en évaluant un signal de commande détecté par le moyen d'éclairage avant (11 ; 118 ; 119).

6. Dispositif d'éclairage selon l'une des revendications précédentes, dans lequel l'unité de commande de l'au moins un module d'éclairage (1 ; 18 ; 19) comprend une interface internet.

7. Dispositif d'éclairage selon l'une des revendications précédentes, dans lequel l'unité de commande de l'au moins un module d'éclairage (1 ; 18 ; 19) comprend au moins un capteur, dans lequel l'unité de commande est configurée pour régler le moyen d'éclairage avant (11 ; 118 ; 119) et le moyen d'éclairage arrière (12 ; 128 ; 129) en évaluant un signal détecté par le capteur, dans lequel l'au moins un capteur est de préférence un capteur du groupe de capteurs constitué de capteurs de luminosité, capteurs de présence, capteurs infrarouges, capteurs acoustiques, capteurs thermiques, microphones, thermomètres, capteurs de distance, capteurs d'accélération et caméras ou d'une combinaison quelconque de ceux-ci.

8. Dispositif d'éclairage selon l'une des revendications précédentes, lequel présente un capteur périphérique, dans lequel l'unité de commande de l'au moins un module d'éclairage (1 ; 18 ; 19) est configurée pour régler le moyen d'éclairage avant (11 ; 118 ; 119) et le moyen d'éclairage arrière (12 ; 128 ; 129) en évaluant un signal détecté par le capteur périphérique.

9. Dispositif d'éclairage selon l'une des revendications précédentes, lequel comprend un support (6) comportant une pluralité de tiges (62) électriquement conductrices et une alimentation en courant (61) connectée aux tiges (62), dans lequel l'au moins un module d'éclairage (1 ; 18 ; 19) présente des collecteurs de courant latéraux et dans lequel les tiges (62) sont disposées de sorte qu'elles serrent l'au moins un module d'éclairage (1 ; 18 ; 19) entre elles et entrent ainsi en contact avec les collecteurs de courant de l'au moins un module d'éclairage (1 ; 18 ; 19).

10. Procédé permettant la commande d'un dispositif d'éclairage permettant d'éclairer un espace cible (2) et comportant une pluralité de modules d'éclairage (1 ; 18; 19) identiques qui présentent respectivement une face avant (14 ; 148 ; 149) tournée vers l'espace cible (2) et une face arrière (15 ; 158 ; 159) opposée à l'espace cible (2) et comprennent un moyen d'éclairage avant (11 ; 118 ; 119) disposé de manière à émettre depuis la face avant (14 ; 148 ; 149), un moyen d'éclairage arrière (12 ; 128 ; 129) disposé de manière à émettre depuis la face arrière (15 ; 158 ; 159) et une unité de commande, dans lequel l'unité de commande est configurée pour régler le moyen d'éclairage avant (11 ; 118 ; 119) et le moyen d'éclairage arrière (12 ; 128 ; 129), dans lequel la pluralité de modules d'éclairage (1 ; 18 ; 19) sont connectés entre eux pour former un réseau dans lequel chacun des modules d'éclairage (1 ; 18 ; 19) forme un noeud, présentant les étapes consistant à :

disposer un appareil d'étalonnage (21) dans l'espace cible (2),
étalonner la pluralité de modules d'éclairage (1 ; 18 ; 19) à un niveau de lumière pouvant être préréglé,
régler de manière dynamique les moyens d'éclairage avant pour l'affichage d'informations, et
régler les moyens d'éclairage arrière de manière adaptée aux moyens d'éclairage avant (11 ; 118 ; 119) réglés de manière dynamique, de sorte que le niveau de lumière étalonné de la pluralité de modules d'éclairage (1 ; 18 ; 19) est constant, dans lequel, en cas de modification du moyen d'éclairage avant (11 ; 118 ; 119), le moyen d'éclairage arrière (12 ; 128 ; 129) est modifié de manière inversement proportionnelle à la modification du moyen d'éclairage avant (11 ; 118 ; 119).

11. Procédé selon la revendication 10, dans lequel le niveau de lumière se compose d'une proportion (41) de lumière (4) émise par le moyen d'éclairage avant (11 ; 118 ; 119) et d'une proportion (51) de lumière (5) émise et réfléchie par le moyen d'éclairage arrière (12 ; 128; 129), dans lequel un rapport de la proportion (51) de lumière (5) émise et réfléchie par le moyen d'éclairage arrière (12 ; 128 ; 129) à la proportion (41) de lumière (4) émise par le moyen d'éclairage avant (11 ; 118 ; 119) est maintenu constant.

12. Procédé selon la revendication 10 ou 11, dans lequel la proportion (51) de lumière (5) émise et réfléchie par le moyen d'éclairage arrière (12 ; 128; 129) correspond au produit d'un facteur constant et de la proportion (41) de lumière (4) émise par le moyen d'éclairage avant (11 ; 118 ; 119).

Fig. 1

Fig. 2

Fig. 3

Fig. 4

Fig. 5

139

159

39

149

119   19   129   169

Fig. 6

168

18

148

118

328

318

158

138   128

Fig. 7

Fig. 8

Fig. 9

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2804443 A1
- WO 2014115048 A1